# EUROPÄISCHE PATENTSCHRIFT

(11) **EP 1 618 159 B1**
(45) Veröffentlichungstag und Bekanntmachung des Hinweises auf die Patenterteilung: **10.01.2007**
(21) Anmeldenummer: 04726450.2
(22) Anmeldetag: 08.04.2004
(51) Int. Cl.: C09D 11/00

(54) **WASSERBASIERENDE FARBMITTELPRÄPARATIONEN FÜR DEN INK-JET-DRUCK**
WATER-BASED COLORING AGENT PREPARATIONS FOR INKJET PRINTING
PREPARATIONS DE COLORANTS A BASE D'EAU POUR L'IMPRESSION A JET D'ENCRE

(30) Priorität: 22.04.2003 DE 10318233
(43) Veröffentlichungstag der Anmeldung: 25.01.2006
(73) Patentinhaber: Clariant Produkte (Deutschland) GmbH, 65929 Frankfurt am Main (DE)
(72) Erfinder: SCHWEIKART, Karl-Heinz, 65760 Eschborn (DE); HARZ, Andreas, 65824 Schwalbach (DE); WINTER, Martin, Alexander, 79400 Kandern (DE); MENZEL, Heidemarie, 65812 Bad Soden (DE)
(86) Internationale Anmeldenummer: PCT/EP2004/003771
(87) Internationale Veröffentlichungsnummer: WO 2004/094541

(56) Entgegenhaltungen:
- EP-A- 0 764 695
- WO-A-00/36030
- CH-A- 283 986
- DE-A- 19 712 486
- US-A- 5 938 830

## Beschreibung

Die vorliegende Erfindung liegt auf dem Gebiet der wasserbasierenden Farbmittelpräparationen.

Das Ink-Jet-Druckverfahren ist, wie zum Beispiel die Elektrophotographie (Laserdrucker und Kopierer), ein berührungsloses Druckverfahren (non impact printing process) und hat durch die zunehmende Verwendung von Computern vor allem im sogenannten SOHO-Bereich (small office, home office), aber auch im sogenannten Wide-Format-Bereich im Verlauf der letzten Jahre immer mehr an Bedeutung gewonnen.

Im Ink-Jet-Druck unterscheidet man zwischen den sogenannten kontinuierlichen Druckverfahren und den Drop-on-Demand-Verfahren, wobei bei den letzteren Verfahren die Tintentropfen durch ein computergesteuertes elektrisches Signal erzeugt werden. Grundsätzlich lassen sich zwei Arten von Drop-on-Demand-Ink-Jet-Verfahren unterscheiden, der sogenannte thermische Ink-Jet-Druck, auch als Bubble-Jet bezeichnet, und der piezoelektrische Ink-Jet-Druck.

Bis heute werden für den thermischen und den piezoelektrischen Ink-Jet-Druck Tinten verwendet, die auf Lösungen wasserlöslicher Farbstoffe basieren, weshalb die Ausdrucke zwar eine hohe Brillanz und optische Dichte aufweisen, jedoch eine nur ungenügende Lichtechtheit und mangelnde Wasserfestigkeit aufweisen. Die genannten Nachteile der farbstoffbasierenden Ink-Jet-Tinten können mit Hilfe von Spezialpapieren nur teilweise überwunden werden. Eine Möglichkeit, die genannten Nachteile der farbstoffbasierenden Tinten zu überwinden, besteht darin, pigmentierte Tinten zu verwenden.
An die pigmentierten Tinten für den Tintenstrahldruck werden eine Reihe von Anforderungen gestellt: Sie müssen zum Drucken eine geeignete Viskosität und Oberflächenspannung aufweisen, sie müssen lagerstabil sein, d.h. sie sollen nicht koagulieren und das dispergierte Pigment soll sich nicht absetzen, sie dürfen nicht zu einer Verstopfung der Druckerdüsen führen, was insbesondere bei den Pigmentpartikel enthaltenden Tinten problematisch sein kann, und sie sollen umweltfreundlich sein, d.h. weitgehend auf Wasser basieren und möglichst niedrige Konzentrationen an organischen Lösemitteln enthalten. Auch an die Reinheit der Präparationen werden hohe Anforderungen gestellt, da zu hohe Konzentrationen anorganischer oder organischer Salze und Ionen, insbesondere von Chloridionen, zur Korrosion und damit zur frühzeitigen Zerstörung der Druckköpfe führen oder im Falle von Bubble-Jet-Druckern zu schädlichen Ablagerungen auf den Heizelementen.
Sehr hohe Anforderungen werden insbesondere an die Farbstärke, den Farbton, die Brillanz, Transparenz und Echtheitseigenschaften, wie beispielsweise Lichtechtheit, Wasserechtheit und Reibeechtheit der Pigmente und Ausdrucke gestellt. Eine hohe Lichtechtheit ist insbesondere dann von Bedeutung, wenn mit Hilfe des Ink-Jet-Verfahrens Drucke mit photographischer Qualität oder für den Außenbereich hergestellt werden sollen. Um diese Eigenschaften zu erfüllen, werden teilweise Mischungen verschiedener Farbstoffe und/oder Pigmente mit unterschiedlichen Eigenschaften verwendet.

Die Feinteiligkeit der Pigmentpräparationen ist eine Grundvoraussetzung für deren Anwendung im Ink-Jet-Druck, denn, um die Düsen nicht zu verstopfen, sollte die mittlere Partikelgröße der Pigmentteilchen einen Wert von 200 nm, vorzugsweise 150 nm nicht überschreiten und die Teilchengrößenverteilung sollte sehr eng sein, so dass auch die maximale Teilchengröße einen Wert von 500 nm nicht überschreitet. Neben der Feinteiligkeit ist vor allem die Flockulationsbeständigkeit ein sehr wichtiges Qualitätskriterium einer Ink-Jet-Präparation, weshalb durch geeignete Additive ein Kristallwachstum oder eine Agglomeration der Pigmentpartikel wirksam verhindert werden muss. Dies geschieht meist durch bestimmte Dispergierhilfsmittel. Eng verbunden mit der Flockulationsbeständigkeit ist die Lagerstabilität der Pigmentdispersionen, denn während längerer Lagerung, auch bei relativ zur Raumtemperatur erhöhten oder erniedrigten Temperaturen, dürfen die Pigmentteilchen nicht agglomerieren. Während des Druckens kommt es zu extremen thermischen und mechanischen Belastungen der pigmentierten Tinten; auch unter diesen Umständen muss das Dispergierhilfsmittel die Stabilität der Pigmentdispersion gewährleisten. Beim sogenannten thermischen Ink-Jet-Druckverfahren, auch als Bubble-Jet bezeichnet, treten kurz andauernde Temperatursprünge von bis zu 500°C auf. Auch unter diesen Bedingungen darf es weder zu einer Flockulation oder Sedimentation des Pigments auf die Heizelemente des Druckers kommen (in der englischsprachigen Literatur als "cogation" bezeichnet) noch zu einem Verstopfen der Druckerdüsen (in der englischsprachigen Literatur als "nozzle clogging" bezeichnet). Beim Druck wird die pigmentierte Tinte durch eine enge Düse geschleudert; hier treten extrem hohe Scherspannungen auf, die zu keiner Abscherung des Dispergierhilfsmittels von der Pigmentoberfläche führen dürfen.

Somit kommt dem verwendeten Dispergierhilfsmittel eine entscheidende Bedeutung zu, weil es nicht nur die physikalischen Eigenschaften, wie z.B. Oberflächenspannung und Viskosität der Dispersionen bestimmt, sondern auch für die Stabilität der Tinten gegenüber der Flockulation während der Lagerung und der Zersetzung während des Druckprozesses sorgen muss.
Darüber hinaus hat das Dispergiermittel einen großen Einfluss auf die Tropfenbildung während des Druckvorgangs. Eine gleichmäßige Tropfenbildung frei von Satelliten ist Voraussetzung für hochqualitative Ink-Jet-Drucke beispielsweise im Fotodruck-Bereich.

Aus der EP-A-1 116 757 sind Pigmentdispersionen für den Ink-Jet-Druck bekannt, die als Dispergiermittelsystem eine Kombination aus ethoxylierten Naphthalinderivaten und Sulfosuccinaten oder Polyethylenglykolcarboxylaten enthalten.
In der US-A-5,938,830 werden pigmentierte Tinten basierend auf N-(1,2-Dicarboxyethyl)-N-disubstituierten Sulfosuccinamaten als Dispergiermittel beschrieben.
Die EP-A-0 448 055 beschreibt wässrige Ink-Jet-Aufzeichnungsflüssigkeiten bestehend aus Pigmenten und Dispergiermitteln, die mindestens eine Sulfonsäuregruppierung tragen. Der Pigmentgehalt liegt dabei bei 2 bis 4 %. Die Lagerstabilitäten sind teilweise unbefriedigend.
Die WO-A-0036030 beschreibt wässrige Tinten enthaltend ein Farbmittel, ein succinamat und einen einen Polyethylenglykolalkylether.

Die aus dem Stand der Technik bekannten pigmentierten Präparationen für den Ink-Jet-Druck erfüllen oftmals nicht die von den Druckerherstellern gestellten Anforderungen, weil sie Defizite in der Feinverteilung, sowie der Temperatur- und Lagerstabilität aufweisen. Insbesondere die Stabilitätsprobleme pigmentierter Ink-Jet-Tinten sind eng verknüpft mit einer ausreichenden Stabilisierung der Pigmentpartikel in den wässrig-organischen Lösungen. Es bestand daher die Aufgabe, mit Hilfe geeigneter Dispergierhilfsmittel neue Pigmentpräparationen bereitzustellen, welche die oben genannten Qualitätsmerkmale und Anforderungen hinsichtlich des Ink-Jet-Druckverfahrens vereinen und deshalb vorteilhafte Anwendung im Ink-Jet-Verfahren finden können.

Überraschenderweise wurde gefunden, dass durch die Verwendung der nachstehend beschriebenen Kombination an Dispergiermitteln Farbmittelpräparationen hergestellt werden können, welche die oben genannten Anforderungen des Ink-Jet-Drucks in hohem Maße erfüllen.

Gegenstand der Erfindung sind daher wässrige Farbmittelpräparationen, bestehend im wesentlichen aus
(A) 0,1 bis 50 Gew.-%, vorzugsweise 15 bis 30 Gew.-%, mindestens eines organischen und/oder anorganischen Farbmittels,
(B) 0,1 bis 30 Gew.-%, vorzugsweise 0,2 bis 10 Gew.-%, mindestens eines Succinamates,
(C) 0,1 bis 30 Gew.-%, vorzugsweise 1 bis 20 Gew.-%, mindestens eines Polyethylenglykolalkylethers, 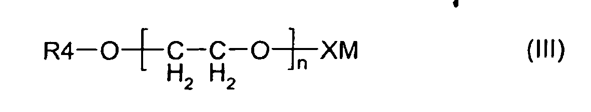 worin
   - R⁴: ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten bevorzugt 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind,
   - n: eine Zahl von 1 bis 100, vorzugsweise von 1 bis 20,
   - X: CH₂COO⁻, SO₃⁻, SO₂⁻ oder PO₃M⁻ und
   - M: H, ein einwertiges Metallkation, NH₄⁺, ein sekundäres, tertiäres oder quartäres Ammoniumion bedeuten,
(D) 0 bis 30 Gew.-%, vorzugsweise 0,1 bis 10 Gew.-%, mindestens eines alkoxylierten Styrol-Phenol-Kondensats,
(E) 0 bis 30 Gew.-%, vorzugsweise 0,1 bis 20 Gew.-%, mindestens eines organischen Lösungsmittels,
(F) 0 bis 30 Gew.-%, vorzugsweise 0,1 bis 20 Gew.-%, mindestens einer hydrotropen Substanz,
(G) 0 bis 10 Gew.-%, vorzugsweise 0,1 bis 5 Gew.-%, weiterer, für Ink-Jet-Präparationen üblicher Zusatzstoffe und
(H) 10 bis 90 Gew.-%, vorzugsweise 30 bis 80 Gew.-%, entionisierten Wassers, jeweils bezogen auf das Gesamtgewicht (100 Gew.-%) der Farbmittelpräparation.

Ebenfalls Gegenstand der Erfindung sind wässrige Farbmittelpräparationen, bestehend aus
(A) 0,1 bis 50 Gew.-%, vorzugsweise 15 bis 30 Gew.-%, mindestens eines organischen und/oder anorganischen Farbmittels,
(B) 0,1 bis 30 Gew.-%, vorzugsweise 0,2 bis 10 Gew.-%, mindestens eines Succinamates,
(C) 0,1 bis 30 Gew.-%, vorzugsweise 1 bis 20 Gew.-%, mindestens eines Polyethylenglykolalkylethers der Formel (III),
(D) 0 bis 30 Gew.-%, vorzugsweise 0,1 bis 10 Gew.-%, mindestens eines alkoxylierten Styrol-Phenol-Kondensats,
(E) 0 bis 30 Gew.-%, vorzugsweise 0,1 bis 20 Gew.-%, mindestens eines organischen Lösungsmittels,
(F) 0 bis 30 Gew.-%, vorzugsweise 0,1 bis 20 Gew.-%, mindestens einer hydrotropen Substanz,
(G) 0 bis 10 Gew.-%, vorzugsweise 0,1 bis 5 Gew.-%, weiterer, für Ink-Jet-Präparationen üblicher Zusatzstoffe und
(H) 10 bis 90 Gew.-%, vorzugsweise 30 bis 80 Gew.-%, entionisierten Wassers, jeweils bezogen auf das Gesamtgewicht (100 Gew.-%) der Farbmittelpräparation.

Die Komponente (A) der erfindungsgemäßen Farbmittelpräparationen ist ein feinteiliges organisches oder anorganisches Pigment und/oder ein organischer Farbstoff oder ein Gemisch verschiedener organischer und/oder anorganischer Pigmente und/oder organischer Farbstoffe. Dabei können die Pigmente sowohl in Form trockener Pulver als auch wasserfeuchter Presskuchen eingesetzt werden.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie zum Beispiel Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht.

Insbesondere eignen sich auch oberflächenmodifizierte Pigmente, deren Oberfläche durch chemische Prozesse wie beispielsweise Sulfonierung oder Diazotierung verändert und mit funktionellen, gegebenenfalls ladungstragenden Gruppen oder Polymerketten versehen wurde (in der englischsprachigen Literatur als self-dispersing bzw. graft pigments bezeichnet).

Geeignete anorganische Pigmente sind beispielsweise Titandioxide, Zinksulfide, Eisenoxide, Chromoxide, Ultramarin, Nickel- oder Chromantimontitanoxide, Cobaltoxide sowie Bismutvanadate.

Als organische Farbstoffe kommen Säurefarbstoffe, Direktfarbstoffe, Schwefelfarbstoffe und deren Leukoform, Metallkomplexfarbstoffe oder Reaktivfarbstoffe in Betracht, wobei im Falle der Reaktivfarbstoffe auch mit Nukleophilen abreagierte Farbstoffe eingesetzt werden können.

Von den genannten organischen Pigmenten sind diejenigen besonders geeignet, deren anhand eines Blaumaßstabs ermittelte Lichtechtheit mit einer Note größer 5, insbesondere größer 6 beurteilt wird. Zudem sollten die für die Herstellung der Zubereitungen verwendeten Pigmente möglichst feinteilig sein, wobei bevorzugt 95 % und besonders bevorzugt 99 % der Pigmentpartikel eine Teilchengröße ≤ 500 nm besitzen. Die mittlere Teilchengröße liegt idealerweise bei einem Wert < 150 nm. In Abhängigkeit vom verwendeten Pigment kann sich die Morphologie der Pigmentteilchen sehr stark unterscheiden, und dementsprechend kann auch das Viskositätsverhalten der Pigmentzubereitungen in Abhängigkeit von der Teilchenform sehr unterschiedlich sein. Um ein ideales, newtonsches Viskositätsverhalten der Präparationen zu erhalten, sollten die Teilchen bevorzugt eine würfelförmige Gestalt besitzen. Bevorzugt werden reine oder nachträglich gereinigte Pigmente mit möglichst wenigen organischen oder anorganischen Verunreinigungen eingesetzt.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254 zu nennen.

Als Auswahl besonders bevorzugter organischer Farbstoffe sind dabei die Colour Index Farbstoffe Acid Yellow 17, Acid Yellow 23, Direct Yellow 86, Direct Yellow 98, Direct Yellow 132, Reactive Yellow 37, Acid Red 52, Acid Red 289, Reactive Red 23, Reactive Red 180, Acid Blue 9, Direct Blue 199 und die mit Nukleophilen abreagierten Reaktivfarbstoffe zu nennen.

Als Komponente (B) kommen bevorzugt Verbindungen der Formeln (la) oder (Ib) in Betracht 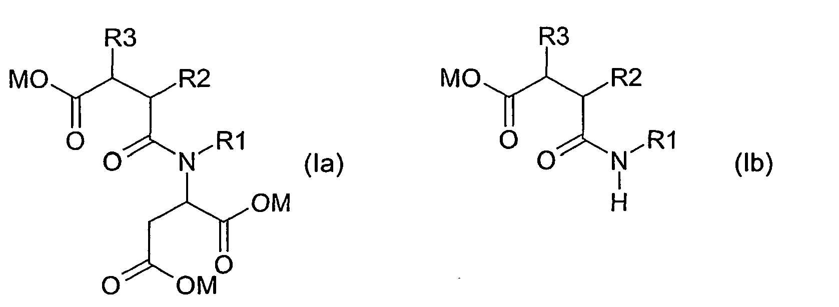 worin
- R¹: H, ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten bevorzugt 1, 2, 3 oder 4 Reste aus der Gruppe Halogen, Aryl, Aryl(C₁-C₂₀)alkyl, Hetaryl, Hetaryl(C₁-C₂₀)alkyl oder C₁-C₂₀-Alkoxy sind,
- R² und R³: unabhängig voneinander H, ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten bevorzugt 1, 2, 3 oder 4 Reste aus der Gruppe Halogen, Hydroxy, C₁-C₄-Alkoxy, Nitro, Cyano, Carboxy, Amino, Sulfo, Aryl, Aryl(C₁-C₄)alkyl, Hetaryl, Hetaryl(C₁-C₄)alkyl, C₁-C₄-Alkoxy, COOM, SO₃M, SO₂M und PO₃M₂ sind, und
- M: H, ein einwertiges Metallkation, NH₄⁺, ein sekundäres, tertiäres oder quartäres Ammoniumion bedeuten.

Unter "Aryl" versteht man dabei sowie auch bei den nachstehenden Definitionen einen aromatischen Rest, der bevorzugt 6 bis 15 C-Atome enthält. Beispiele hierfür sind Phenyl, Naphthyl, Anthryl und Phenanthryl.

Unter "Hetaryl" versteht man dabei sowie auch in den nachstehenden Definitionen einen aromatischen Rest, der bevorzugt neben 1 bis 10 C-Atomen 1, 2, 3 oder 4 Heteroatome aus der Gruppe O, N, S oder P enthält. Beispiele hierfür sind Pyrrolyl, Furyl, Thiophenyl, Indolyl, Isoindolyl, Indolizinyl, Benzofuryl, Benzothiophenyl, Pyrazolyl, Imidazolyl, Oxazolyl, Isoxazolyl, Thiazolyl, Isothiazolyl, Triazolyl, Tetrazolyl, Pyridyl, Chinolinyl, Isochinolinyl, Pyridazinyl, Pyrimidinyl, Pyrazinyl und Triazinyl.

Besonders bevorzugt sind dabei Verbindungen der Formel (IIa) oder (IIb) 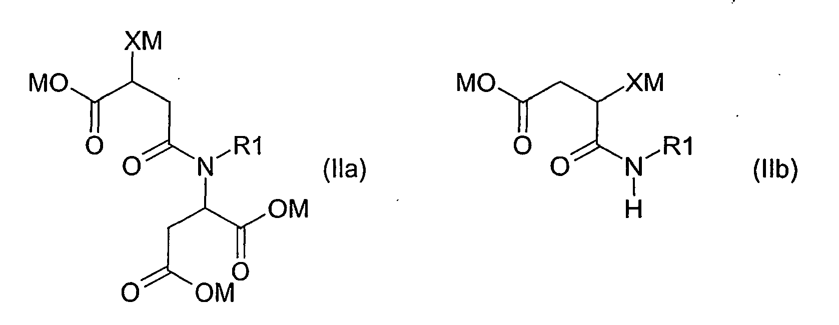 worin
- R¹: H, ein verzweigter oder unverzweigter C₁-C₂₀-Alkylrest oder ein verzweigter oder unverzweigter C₁-C₂₀-Alkenylrest, die wie vorstehend beschrieben substituiert sein können,
- X: COO⁻, SO₃⁻, S0₂⁻ oder PO₃M⁻ und
- M: H, ein einwertiges Metallkation, NH₄⁺, ein sekundäres, tertiäres oder quartäres Ammoniumion bedeuten.

In besonders bevorzugten Verbindungen der Formeln (la), (Ib), (IIa) und (IIb) bedeutet R¹ C₁₂-C₁₈-Alkyl (verzweigt oder unverzweigt) oder C₁₂-C₁₈-Alkenyl (verzweigt oder unverzweigt), die durch 1, 2, 3 oder 4 Substituenten aus der Gruppe Halogen, Aryl, Aryl(C₁-C₄)alkyl, Hetaryl, Hetaryl(C₁-C₄)alkyl oder C₁-C₄-Alkoxy substituiert sein können, X ist vorzugsweise SO₃⁻ und M ist vorzugsweise H⁺, Li⁺, Na⁺, K⁺, NH₄⁺, HO-CH₂-CH₂-NH₃⁺, (HO-CH₂-CH₂-)₂NH₂⁺ oder (HO-CH₂-CH₂-)₃NH⁺.

In besonders bevorzugten Verbindungen der Formel (III) bedeutet R⁴ C₁₂-C₁₈-Alkyl (verzweigt oder unverzweigt) oder C₁₂-C₁₈-Alkenyl (verzweigt oder unverzweigt), die durch 1, 2, 3 oder 4 Substituenten aus der Gruppe Halogen, Aryl, Aryl(C₁-C₄)alkyl, Hetaryl, Hetaryl(C₁-C₄)alkyl oder C₁-C₄-Alkoxy substituiert sein können, X ist vorzugsweise CH₂COO⁻ und M ist vorzugsweise H⁺, Li⁺, Na⁺, K⁺, NH₄⁺, HO-CH₂-CH₂-NH₃⁺, (HO-CH₂-CH₂-)₂NH₂⁺ oder (HO-CH₂-CH₂-)₃NH⁺.

Beispiele für Verbindungen der Formel (III) sind:

C₁₂H₃₅-O-(CH₂CH₂O)₄-CH₂COONa,

C₁₂H₃₅-O-(CH₂CH₂O)₆-CH₂COONa,

C₁₄H₂₉-O-(CH₂CH₂O)₁₂-CH₂COONa,

C₁₆H₃₃-O-(CH₂CH₂O)₁₀-CH₂COONa,

C₁₈H₃₇-O-(CH₂CH₂O)₁₂-CH₂COONa,

C₁₈H₃₅-O-(CH₂CH₂O)₁₀-CH₂COONa,

C₁₈H₃₅-O-(CH₂CH₂O)₁₂-CH₂COONa,

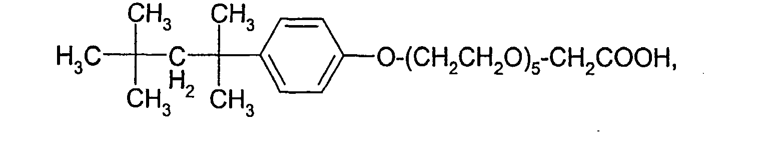

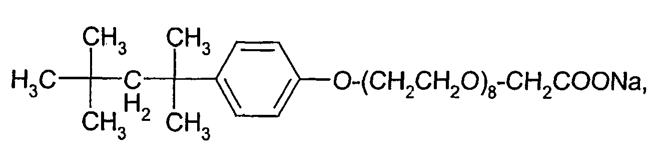

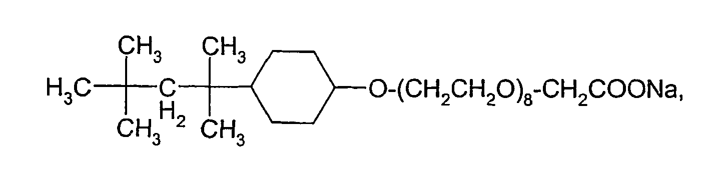

C₁₁H₂₃-O-(CH₂CH₂O)₇-SO₃Na.

Derartige Verbindungen sind aus CH-A-324 665 und CH-A-283 986 bekannt.

Als Komponente (D) kommen bevorzugt Verbindungen der Formel (IV) oder (V) oder deren Gemische in Betracht 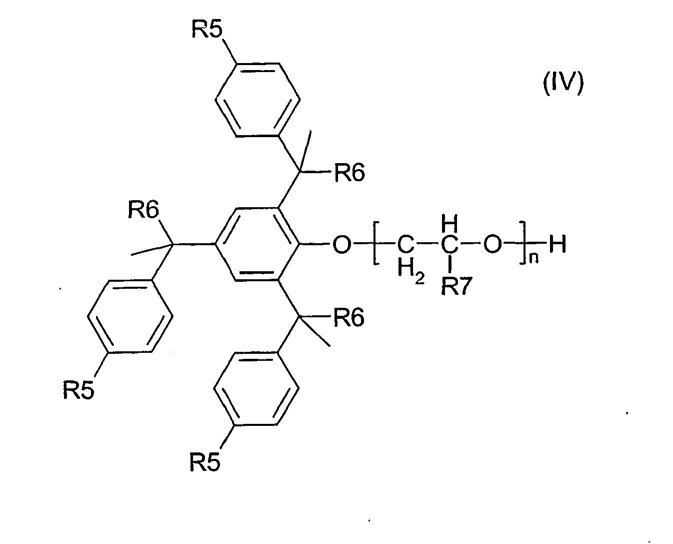 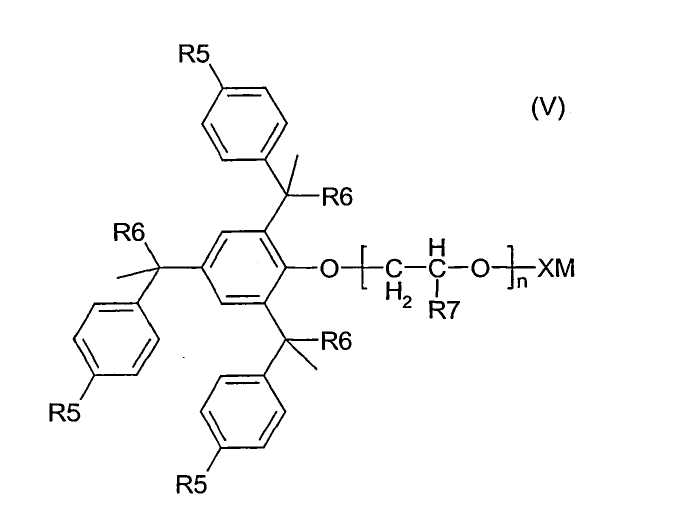 worin
- R⁵: H, ein verzweigter oder unverzweigter C₁-C₂₀-Alkyl- oder C₃-C₂₀-Cycloalkylrest oder ein verzweigter oder unverzweigter C₁-C₂₀-Alkenyl- oder C₃-C₂₀-Cycloalkenylrest, bevorzugt H oder ein C₁-C₄-Alkylrest,
- R⁶ und R⁷: unabhängig voneinander H, ein verzweigter oder unverzweigter C₁-C₂₀-Alkyl- oder C₃-C₂₀-Cycloalkylrest oder ein verzweigter oder unverzweigter C₁-C₂₀-Alkenyl- oder C₃-C₂₀-Cycloalkenylrest, bevorzugt H oder CH₃,
- n: eine Zahl von 1 bis 100, vorzugsweise von 20 bis 60,
- X: CO-R₈-COO-, SO₃⁻, SO₂⁻ oder PO₃M⁻,
- R⁸: ein substituierter oder unsubstituierter, verzweigter oder unverzweigter C₁-C₂₀-Alkylenrest, ein substituierter oder unsubstituierter, verzweigter oder unverzweigter C₁-C₂₀-Alkenylenrest, oder ein substituierter oder unsubstituierter Arylenrest, wobei die Substituenten bevorzugt 1, 2, 3 oder 4 Reste aus der Gruppe Halogen, Hydroxy, C₁-C₄-Alkoxy, Nitro, Cyano, Carboxy, Amino oder Sulfo sind, bevorzugt CH=CH, CH(SO₃M)-CH₂ oder CH₂-CH(SO₃M), und
- M: H, ein einwertiges Metallkation, NH₄⁺, ein sekundäres, tertiäres oder quartäres Ammoniumion bedeuten.

Bevorzugte Bedeutungen von M sind wie vorstehend definiert.

Derartige Verbindungen sind beispielsweise aus DE-A-195 35 246 und DE-A-197 12 486 bekannt.

Die erfindungsgemäßen Farbmittelpräparationen können als Komponente (E) ein organisches Lösemittel oder Gemische derartiger Lösungsmittel enthalten, wobei diese Lösungsmittel gegebenenfalls eine wasserzurückhaltende Wirkung besitzen. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 6 C-Atomen, z. B. Ethylenglykol, Propylenglykol, 1,3-Propandiol, 1,4-Butandiol, 1,5-Pentandiol, 1,6-Hexandiol, Neopentylglykol, 1,2,6-Hexantriol, Glycerin, 2-Ethyl-2-hydroxymethyl-1,3-propandiol, Diethylenglykol, Triethylenglykol, Polyethylenglykol, Dipropylenglykol, Tripropylenglykol, Polypropylenglykol; niedere Alkylether von mehrwertigen Alkoholen, wie z.B. Ethylenglykolmonomethyl- oder ethyl- oder butylether, Triethylenglykolmonomethyl- oder ethylether; Ketone und Ketonalkohole, wie z.B. Aceton, Methylethylketon, Di-ethylketon, Methylisobutylketon, Methytpentyiketon, Cyclopentanon, Cyclohexanon, Diacetonalkohol; Amide, wie z.B. Dimethylformamid, Dimethylacetamid und N-Methylpyrrolidon.

Als hydrotrope Verbindungen (F), die gegebenenfalls auch als Lösungsmittel dienen, können beispielsweise Formamid, Harnstoff, Tetramethylharnstoff, ε-Caprolactam, Ethylenglykol, Propylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Natrium-Xylolsulfonat, Natrium-Toluolsulfonat, Natrium-Cumolsulfonat, Natrium-Dodecylsulfonat, Natrium-Benzoat, Natrium-Salicylat oder Natrium-Butylmonoglykolsulfat eingesetzt werden.

Weiterhin können die erfindungsgemäßen Farbmittelpräparationen als Komponente (G) noch weitere, insbesondere für Ink-Jet-Tinten und in der Druck- und Lackindustrie übliche Zusatzstoffe enthalten, wie beispielsweise Konservierungsmittel, Lichtschutzmittel, Antioxidantien, kationische, anionische, amphotere oder nichtionogene oberflächenaktive Substanzen (Tenside und Netzmittel), Entgaser/Entschäumer sowie Mittel zur Regulierung der Viskosität, z.B. Polyvinylalkohol, Cellulosederivate oder wasserlösliche natürliche oder künstliche Harze und Polymere als Filmbildner bzw. Bindemittel zur Erhöhung der Haft- und Abriebfestigkeit. Als pH-Regulatoren kommen organische oder anorganische Basen und Säuren zum Einsatz. Bevorzugte organische Basen sind Amine, wie z.B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natrium-, Kalium-, Lithiumhydroxid oder Ammoniak.

Zur Herstellung der Farbmittelpräparationen benutztes Wasser, Komponente (H), wird vorzugsweise in Form von destilliertem oder entsalztem Wasser eingesetzt.

Die erfindungsgemäße Kombination der Dispergiermittel ermöglicht niedrige Viskositäten, was speziell für Anwendungen im Ink-Jet-Bereich von großer Bedeutung ist, sowie eine rasche Migration des Dispergiermittels zur sich während des Druckvorganges neu bildenden Oberfläche des Tintentropfens und somit zu einer stabilen und gleichmäßigen Tropfenbildung. Auf diese Weise sind Ink-Jet-Drucke mit hoher Qualität möglich.
Häufig als Dispergiermittel eingesetzte Acrylathare, aber auch einige andere Polymere und Copolymere mit einer relativ großen Anzahl von terminalen Carboxylresten, neigen dazu, mit mehrfach geladenen Metallkationen, wie z.B. Ca²⁺, Mg²⁺ oder Fe³⁺, unlösliche Komplexe zu bilden, was zu Flockulierung und damit zu niedriger Stabilität der Dispersion in Gegenwart von Fremdsalzverunreinigungen führen kann. Solche Metallverunreinigungen werden oft synthesebedingt über das Pigment in die Dispersion eingebracht, was die Auswahl von geeigneten Pigmenten einschränkt. Ein solcher negativer Einfluß von Metallverunreinigungen wird beim Dispergiermittelsystem der vorliegenden Erfindung nicht beobachtet. Das erfindungsgemäße Dispergiermittelsystem ist somit vorteilhaft für eine große Vielfalt von Pigmenten geeignet.
Ein weiteres Problem, das oft mit der Verwendung von Polymeren in Ink-Jet-Tinten verknüpft ist, ist deren Tendenz, sich an den Düsen des Druckkopfes zu verfestigen, was zu deren Verstopfen (nozzle clogging) und damit zu einem schlechten Druckverhalten führt. Ein solcher Ausfall der Düsen wird bei Einsatz der erfindungsgemäßen Dispergiermittel nicht beobachtet, was einen streifenfreien und damit gleichmäßigen Druck ermöglicht.

Gegenstand der Erfindung ist weiterhin ein Verfahren zur Herstellung einer Farbmittelpräparation, dadurch gekennzeichnet, dass das Farbmittel (A), bevorzugt als Pulver oder als Presskuchen, zusammen mit den Komponenten (B), (C), und gegebenenfalls (D), (E), (F) und/oder (G) in entionisiertem Wasser (Komponente H) angeteigt und homogenisiert wird, und mit Hilfe eines Mahl- oder Dispergieraggregats feindispergiert oder feinverteilt wird.
Vorzugsweise wird dabei so verfahren, dass in einem ersten Schritt mindestens ein Farbmittel (Komponente A), entweder als Pulver oder als Presskuchen, zusammen mit mindestens einem Dispergiermittel auf Basis eines wasserlöslichen Sulfosuccinamates der Formel (la) oder (Ib) (Komponente B), mindestens einem Polyethylenglykolalkylether bzw. dessen Salz der Formel (III) (Komponente C), gegebenenfalls mindestens einem alkoxylierten Styrol-Phenol-Kondensat der Formel (IV) oder (V) bzw. deren Gemisch (Komponente D), gegebenenfalls mit mindestens einem organischen Lösemittel (Komponente E), gegebenenfalls mit mindestens einer hydrotropen Substanz (Komponente F) und gegebenenfalls den anderen Zusätzen (Komponente G) in entionisiertem Wasser (Komponente H) angeteigt und anschließend mit einem Dissolver oder einer anderen geeigneten Apparatur homogenisiert und vordispergiert wird. Die Feindispergierung erfolgt daran anschließend mit Hilfe einer Perlmühle oder einem anderen geeigneten Dispergieraggregat, wobei die Feindispergierung bzw. Mahlung unter Kühlung bis zur gewünschten Teilchengrößenverteilung der Farbmittel-, insbesondere Pigmentpartikel, erfolgt. Im Anschluss an die Feindispergierung kann die Dispersion mit entionisiertem Wasser weiter verdünnt werden.
Gegenstand der Erfindung ist weiterhin die Verwendung der beschriebenen Farbmittelpräparation als Farbmittel für Drucktinten, insbesondere für Ink-Jet-Tinten, elektrophotographische Toner, insbesondere Polymerisationstoner, Pulverlacke und Farbfilter.

Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten.

Ink-Jet-Tinten auf wässriger Basis enthalten im wesentlichen 0,5 bis 30 Gew.-%, vorzugsweise 1 bis 15 Gew.-%, einer oder mehrerer der erfindungsgemäßen Farbmittelpräparationen, 70 bis 95 Gew.-% Wasser, 0 bis 30 Gew.-% einer oder mehrerer hydrotropen, d.h. wasserzurückhaltenden Verbindungen und/oder organischer Lösungsmittel. Gegebenenfalls können die wasserbasierenden Ink-Jet-Tinten noch wasserlösliche Bindemittel und weitere Zusatzstoffe enthalten, wie z.B. Tenside und Netzmittel, Entgaser/Entschäumer, Konservierungsmittel und Antioxidantien.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, einer oder mehrerer der erfindungsgemäßen Farbmittelpräparationen, 0,5 bis 95 Gew.-% Wasser und 0,5 bis 95 Gew.-% organische Lösungsmittel und/oder Grenzflächenvermittler.

Solvent-based Ink-Jet-Tinten bestehen im wesentlichen aus 0,5 bis 30 Gew.-% einer oder mehrerer der erfindungsgemäßen Farbmittelpräparationen, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.

UV-härtbare Tinten enthalten im wesentlichen 0,5 bis 30 Gew.-% einer oder mehrerer der erfindungsgemäßen Farbmittelpräparationen, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt. Gegenstand der Erfindung ist auch eine Hot-Melt-Ink-Jet-Tinte, bestehend im wesentlichen aus 20 bis 90 Gew.-% Wachs und 1 bis 10 Gew.-% einer oder mehrerer der erfindungsgemäßen Farbmittelpräparationen. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Die erfindungsgemäßen Drucktinten, insbesondere Ink-Jet-Tinten, können hergestellt werden, indem die Farbmittelpräparationen in das Mikroemulsionsmedium oder in das wässrige oder nicht-wässrige Medium oder in das Medium zur Herstellung der UV-härtbaren Tinte oder in das Wachs zur Herstellung einer Hot-Melfi-Ink-Jet-Tinte eindispergiert wird.
Zweckmäßigerweise werden die dabei erhaltenen Drucktinten für Ink-Jet-Anwendungen anschließend filtriert (z.B. über einen 1 µm Filter).

Gegenstand der Erfindung ist weiterhin ein Satz von Drucktinten, der Drucktinten der Farben Schwarz, Cyan, Magenta, Gelb, gegebenenfalls Grün und gegebenenfalls Orange enthält und dadurch gekennzeichnet ist, dass mindestens eine der Drucktinten eine erfindungsgemäße Farbmittelpräparation ist oder enthält.
Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthron- oder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment.Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 256, Pigment Red 257, Pigment Red 262, Pigment Red 263, Pigment Red 266, Pigment Red 269, Pigment Red 274, Pigment Violet 19, Pigment Violet 23 oder Pigment Violet 32; dessen Gelb-Präparation bevorzugt ein Pigment aus der Gruppe der Monoazo-, Disazo-, Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196 oder Pigment Yellow 213; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 72 oder Pigment Orange 74; dessen Grün-Präparation bevorzugt ein Pigment aus der Gruppe der Phthalocyaninpigmente enthält, insbesondere die Colour Index Pigmente Pigment Green 7 oder Pigment Green 36.

Die erfindungsgemäßen Drucktinten eignen sich für den Einsatz in allen konventionellen Ink-Jet-Druckern, inbesondere für solche, die auf dem Bubble-Jet- oder Piezo-Verfahren beruhen.

Außer zum Bedrucken von Papier, natürlichen oder synthetischen Fasermaterialien, Folien oder Kunststoffen können die erfindungsgemäßen Pigmentpräparationen zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Die erfindungsgemäßen Farbmittelpräparationen sind auch geeignet als Farbmittel in elektrophotographischen Tonern und Entwicklern, wie z.B. Einkomponenten- und Zweikomponentenpulvertonern (auch Ein- oder Zweikomponenten-Entwickler genannt), Magnettonern, Flüssigtonern, Polymerisationstonern sowie anderen Spezialtonern. Typische Tonerbindemittel sind Polymerisations-, Polyadditions- und Polykondensationsharze, wie z.B. Styrol-, Styrolacrylat-, Styrolbutadien-, Acrylat-, Polyester- oder Phenol-Epoxidharze, Polysulfone oder Polyurethane, einzeln oder in Kombination, sowie Polyethylen und Polypropylen, die noch weitere Inhaltsstoffe, wie Ladungssteuermittel, Wachse oder Fließmittel, enthalten können oder im nachhinein zugesetzt bekommen können.

Des weiteren sind die erfindungsgemäßen Farbmittelpräparationen auch als Farbmittel in Pulverlacken, insbesondere in triboelektrisch oder elektrostatisch versprühten Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen, geeignet. Als Pulverlackharze werden typischerweise Epoxidharze, carboxyl- und hydroxylgruppenhaltige Polyesterharze, Polyurethane und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Weiterhin sind die erfindungsgemäßen Farbmittelpräparationen auch geeignet als Farbmittel für Farbfilter sowohl für die additive wie subtraktive Farberzeugung sowie als Farbmittel für elektronische Tinten ("electronic inks") oder "electronic paper" ("e-paper").

Außerdem eignen sich die erfindungsgemäßen Farbmittelpräparationen für die Pigmentierung von Anstrich- und Dispersionsfarben, Dispersionslacken, für Druckfarben, beispielsweise Textildruck-, Flexodruck-, Dekordruck- oder Tiefdruckfarben, für Tapetenfarben, für wasserverdünnbare Lacke, für Holzschutzsysteme, für Viskose-Spinnfärbung, für Lacke, für Wurstdärme, für Saatgut, für Glasflaschen, für die Massefärbung von Dachziegeln, für Putze, für Holzbeizen, für Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien.

Es zeigte sich, dass die erfindungsgemäßen Farbmittelpräparationen insgesamt vorteilhafte Anwendungseigenschaften besitzen und die vorstehend genannten Aufgaben und Anforderungen insbesondere im Ink-Jet-Druck bestens erfüllen. Die Viskosität ist meist niedrig (< 15 mPa s bei 400 s⁻¹ im Falle der Pigmentpräparationen) und bleibt sowohl bei Raumtemperatur als auch bei 4-wöchiger Lagerung bei 60°C stabil. Die Pigmentpartikel in der Dispersion besitzen eine durchschnittliche Teilchengröße von < 150 nm (ermittelt mittels der CHDF-Methode), und die Teilchengrößenverteilung ändert sich praktisch nicht oder nur unwesentlich während der Lagerung. Die aus den Präparationen hergestellten Tinten zeichnen sich vor allem durch ein ausgesprochen gutes Verhalten im Ink-Jet-Druck aus und durch gute Stabilität während der Lagerung und im Ink-Jet-Druckprozeß. Des weiteren zeichnen sich die hergestellten Drucke durch ihre hohe Licht- und Wasserechtheit aus.

### Beispiele

### I. Herstellung einer Pigmentpräparation

Das Pigment wurde, entweder als Pulver oder als Presskuchen, zusammen mit den Dispergiermitteln, dem organischen Lösemittel und den anderen Zusätzen in entionisiertem Wasser angeteigt und dann mit einem Dissolver (z.B. von der Firma Pendraulik, Type LD 50) oder einer anderen geeigneten Apparatur homogenisiert und vordispergiert. Die anschließende Feindispergierung erfolgte mit Hilfe einer Perlmühle (z.B. mit einer MiniZETA 03 der Firma Netzsch) oder aber einem anderen geeigneten Dispergieraggregat, wobei die Mahlung unter Kühlung bis zur gewünschten Teilchengrößenverteilung der Pigmentpartikel erfolgte. Im Anschluss wurde die Dispersion mit entionisiertem Wasser auf die gewünschte Pigmentendkonzentration eingestellt.

Die in den folgenden Beispielen beschriebenen Pigmentpräparationen wurden nach dem zuvor beschriebenen Verfahren hergestellt, wobei die folgenden Bestandteile in den angegebenen Mengen so verwendet wurden, dass 100 Teile der jeweiligen Pigmentpräparation entstehen:

### Beispiel 1

| | |
|---|---|
| 20 Teile | C.I. Pigment Yellow 155 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ =C₁₈H₃₅, n = 12, X = CH₂COO⁻, M = Na) |
| 2 Teile | Dispergiermittel (IV) (R⁵/R⁶/R⁷ = H, n = 20) |
| 10 Teile | Propylenglykol |
| 0,2 Teile | Konservierungsmittel |
| Rest | Wasser |

### Beispiel 2

| | |
|---|---|
| 20 Teile | C.I. Pigment Red 122 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 2 Teile | Dispergiermittel (IV) (R⁵/R⁶/R⁷ = H, n = 20) |
| 10 Teile | Propylenglykol |
| 0,2 Teile | Konservierungsmittel |
| Rest | Wasser |

### Beispiel 3

| | |
|---|---|
| 20 Teile | C.I. Pigment Blue 15:3 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 2 Teile | Dispergiermittel (IV) (R⁵/R⁶/R⁷ = H, n = 20) |
| 10 Teile | Propylenglykol |
| 0,2 Teile | Konservierungsmittel |
| Rest | Wasser |

### Beispiel 4

| | |
|---|---|
| 20 Teile | C.I. Pigment Yellow 155 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 2 Teile | Dispergiermittel (IV) (R⁵/R⁶/R⁷ = H, n = 29) |
| 10 Teile | Propylenglykol |
| 0,2 Teile | Konservierungsmittel |
| Rest | Wasser |

### Beispiel 5

| | |
|---|---|
| 20 Teile | C.I. Pigment Red 122 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1 Teil | Dispergiermittel (IV) (R⁵/R⁶/R⁷ = H, n = 54) |
| 10 Teile | Propylenglykol |
| 0,2 Teile | Konservierungsmittel |
| Rest | Wasser |

### Beispiel 6

| | |
|---|---|
| 20 Teile | C.I. Pigment Blue 15:3 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1 Teil | Dispergiermittel (IV) (R⁵/R⁶/R⁷ = H, n = 54) |
| 10 Teile | Propylenglykol |
| 0,2 Teile | Konservierungsmittel |
| Rest | Wasser |

### Beispiel 7

| | |
|---|---|
| 20 Teile | C.I. Pigment Yellow 155 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1,2 Teile | Emulgator 374 (Arylethylphenyl-polyglykolether, Bayer AG) |
| 10 Teile | Propylenglykol |
| 0,2 Teile | Konservierungsmittel |
| Rest | Wasser |

### Beispiel 8

| | |
|---|---|
| 20 Teile | C.I. Pigment Red 122 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1,2 Teile | Emulgator 374 (Arylethylphenyl-polyglykolether, Bayer AG) |
| 10 Teile | Propylenglykol |
| 0,2 Teile | Konservierungsmittel |
| Rest | Wasser |

### Beispiel 9

| | |
|---|---|
| 20 Teile | C.I. Pigment Blue 15:3 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1,2 Teile | Emulgator 374 (Arylethylphenyl-polyglykolether, Bayer AG) |
| 10 Teile | Propylenglykol |
| 0,2 Teile | Konservierungsmittel |
| Rest | Wasser |

### Beispiel 10

| | |
|---|---|
| 20 Teile | C.I. Pigment Yellow 155 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Beispiel 11

| | |
|---|---|
| 20 Teile | C.I. Pigment Red 122 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Beispiel 12

| | |
|---|---|
| 20 Teile | C.I. Pigment Blue 15:3 |
| 0,7 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Beispiel 13

| | |
|---|---|
| 20 Teile | C.I. Pigment Red 122 |
| 0,7 Teile | Sulfosuccinamat der Formel (IIb) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Beispiel 14

| | |
|---|---|
| 20 Teile | C.I. Pigment Blue 15:3 |
| 0,7 Teile | Sulfosuccinamat der Formel (IIb) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Beispiel 15

| | |
|---|---|
| 15 Teile | Rußpigment (C. I. Pigment Black 7) |
| 0,2 Teile | Sulfosuccinamat der Formel (IIa) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1,1 Teile | Dispergiermittel (IV) (R⁵/R⁶/R⁷ = H, n = 20) |
| 0,7 Teile | Dispergiermittel (V) (R⁵/R⁶/R⁷ = H, n = 20, X = PO₃M⁻, M = (HO-CH₂-CH₂-)₃NH⁺) |
| 10 Teile | Propylenglykol |
| 0,2 Teile | Konservierungsmittel |
| Rest | Wasser |

### Beispiel 16

| | |
|---|---|
| 15 Teile | Rußpigment (C. I. Pigment Black 7) |
| 0,2 Teile | Sulfosuccinamat der Formel (IIb) (R¹ = C₁₈H₃₇, X = SO₃⁻, M = Na) |
| 3 Teile | Dispergiermittel (III) (R⁴ = C₁₈H₃₅, n = 12, X = CH₂COO⁻, M = Na) |
| 1,1 Teile | Dispergiermittel (IV) (R⁵/R⁶/R⁷ = H, n = 20) |
| 0,7 Teile | Dispergiermittel (V) (R⁵/R⁶/R⁷ = H, n = 20, X = PO₃M⁻, M = (HO-CH₂-CH₂-)₃NH⁺) |
| 10 Teile | Propylenglykol |
| 0,2 Teile | Konservierungsmittel |
| Rest | Wasser |

### Vergleichsbeispiel 1

| | |
|---|---|
| 20 Teile | C.I. Pigment Yellow 155 |
| 8 Teile | ethoxyliertes Naphthalinderivat der Formel (VI) 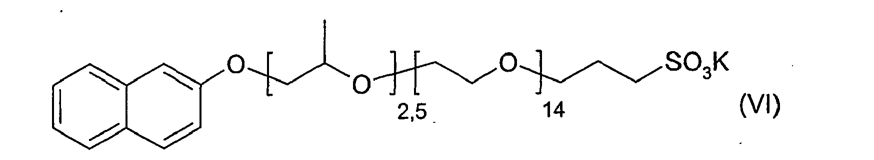 |
| 1,5 Teile | ethoxyliertes Naphthalinderivat der Formel (VII) 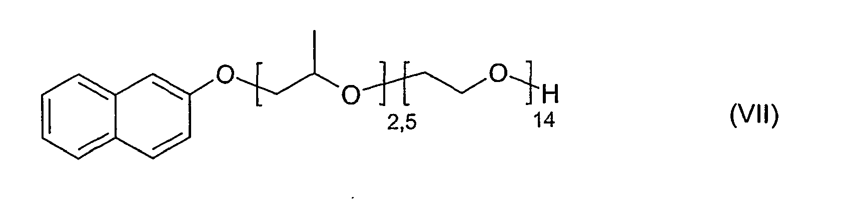 |
| 0,7 Teile | Sulfosuccinat der Formel (VIII) 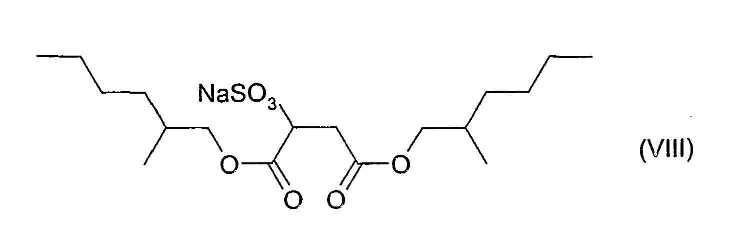 |
| 10 Teile | Propylenglykol |
| 0,2 Teile | Konservierungsmittel |
| Rest | Wasser |

### Vergleichsbeispiel 2

| | |
|---|---|
| 20 Teile | C.I. Pigment Yellow 155 |
| 8 Teile | ethoxyliertes Naphthalinderivat der Formel (VI) |
| 1,5 Teile | ethoxyliertes Naphthalinderivat der Formel (VII) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Vergleichsbeispiel 3

| | |
|---|---|
| 20 Teile | C.I. Pigment Yellow 155 |
| 8 Teile | ethoxyliertes Naphthalinderivat der Formel (VI) |
| 1,5 Teile | ethoxyliertes Naphthalinderivat der Formel (VII) |
| 0,7 Teile | Sulfosuccinat der Formel (VIII) |
| 3 Teile | Dispergiermittel (III) (R⁴ = C₁₈H₃₅, n = 12, X = CH₂COO⁻, M = Na) |
| 10 Teile | Propylenglykol |
| 0,2 Teile | Konservierungsmittel |
| Rest | Wasser |

### Vergleichsbeispiel 4

| | |
|---|---|
| 20 Teile | C.I. Pigment Yellow 155 |
| 10 Teile | Sulfosuccinamat der Formel (IIa) (R¹ = C₁₈H₃₇, X = SO₃⁻, M = Na) |
| 10 Teile | Propylenglykol |
| 0,2 Teile | Konservierungsmittel |
| Rest | Wasser |

### II Untersuchung der physikalischen Eigenschaften

Die für den Ink-Jet-Druck geeigneten Pigmentpräparationen müssen eine Reihe von physikalischen Eigenschaften erfüllen: Sie sollen selbst bei höheren Pigmentkonzentrationen eine möglichst geringe Viskosität (vorzugsweise < 50 mPas) aufweisen, d.h. gut fließfähig sein. Die dispergierten Pigmentteilchen sollten sehr feinteilig sein, d.h. die mittlere Teilchengröße D₅₀ sollte einen Wert von 150 nm nicht überschreiten.

Für die Untersuchung der physikalischen Eigenschaften der Pigmentzubereitungen wurden folgende Methoden und Gerätschaften verwendet:

### Viskosität

Die Viskosität wurde mit einem Kegel-Platte-Viskosimeter (Roto Visco 1) der Firma Haake bestimmt (Titankegel: Ø 60 mm, 1 °), wobei die Abhängigkeit der Viskosität von der Schergeschwindigkeit in einem Bereich zwischen 0 und 700 s⁻¹ untersucht wurde. Die in Tabelle 1 genannten Viskositätswerte wurden bei einer Schergeschwindigkeit von 400 s⁻¹ gemessen. Für eine Beurteilung der Lagerstabilität der Dispersionen wurde die Viskosität (1) direkt nach der Herstellung der Präparation, (2) nach einwöchiger Lagerung bei 60°C und (3) nach vierwöchiger Lagerung bei 60°C gemessen.

### Teilchengrößen

Die mittleren Teilchengrößen D₅₀ der Präparationen wurden mit der CHDF-Methode (capillary hydrodynamic fractioning) bestimmt.

### pH-Wert

Der pH-Wert wurde mit dem pH-Meter inoLab pH/Cond der Firma WTW bestimmt.

Die folgende Tabelle 1 gibt einen Überblick über die physikalischen Eigenschaften der verschiedenen, in den Beispielen genannten Pigmentpräparationen:

**Tabelle 1**

| Beispiel | pH-Wert | Viskosität bei 400 s⁻¹ [mPa·s] | | | D₅₀ [nm] |
|---|---|---|---|---|---|
| | | frisch | 1 Woche/60°C | 4 Wochen/60°C | |
| 1 | 7,2 | 9,4 | 39,1 | 33,8 | 109,7 |
| 2 | 9,1 | 5,4 | 14,8 | 75,3 | 84,6 |
| 3 | 8,3 | 5,8 | 7,7 | 8,5 | 77,2 |
| 4 | 7,2 | 9,3 | 23,3 | 18,2 | 129,7 |
| 5 | 8,9 | 11,5 | 10,6 | 10,0 | 85,5 |
| 6 | 7,9 | 7,3 | 6,5 | 8,7 | 85,5 |
| 7 | 7,4 | 6,7 | 12,4 | 13,8 | 120,8 |
| 8 | 9,4 | 8,7 | 9,1 | 10,1 | 72,7 |
| 9 | 7,9 | 5,2 | 8,2 | 8,4 | 72,6 |
| 10 | 7,2 | 6,1 | 7,3 | 6,6 | 115,4 |
| 11 | 8,8 | 8,8 | 7,6 | 4,6 | 85,5 |
| 12 | 7,8 | 5,8 | 7,4 | 6,8 | 85,2 |
| 13 | 9,4 | 7,8 | 10,6 | 9,8 | 85,2 |
| 14 | 7,8 | 7,1 | 6,5 | 6,9 | 91,0 |
| 15 | 7,0 | 5,9 | 21,6 | 30,2 | 79,3 |
| 16 | 7,0 | 6,5 | 25,2 | 31,7 | 73,9 |
| 1 | 5,9 | 39,5 | 23,6^{b} | 25,8^{b} | 101,2 |
| 2 | 6,1 | 69,9 | 38,5^{b} | 32,0^{b} | 125,3 |
| 3 | 6,1 | 67,2 | 23,1^{b} | 39,5^{b} | 120,5 |
| 4 | 7,9 | 157,4 | -----^{a} | -----^{a} | 145,8 |

| | | | | | |
|---|---|---|---|---|---|
| ^{a} Probe wird bei der Lagerung fest. ^{b} Während der Warmlagerung tritt starke Flokkulation und Sedimentation auf. | | | | | |

Alle in Tabelle 1 aufgeführten Beispiele erfindungsgemäßer Pigmentpräparationen besitzen, wie gefordert, eine ausgezeichnete Fließfähigkeit. Die Viskositäten der frischen Proben liegen ausnahmslos bei < 15 mPas. Die Messergebnisse zeigen, dass durch die Lagerung bei 60°C, von wenigen Ausnahmen abgesehen, nur sehr geringe Viskositätsänderungen auftreten, die Dispersionen also lagerstabil sind. Des weiteren liegt der D₅₀-Wert für die mittlere Teilchengröße für alle erfindungsgemäßen Pigmentpräparationen unterhalb von 150 nm, diese erfüllen somit die Voraussetzungen, die an Pigmentkonzentrate für den Ink-Jet-Druck gestellt werden.

### III Prüfung der drucktechnischen Eigenschaften der Pigmentpräparationen

Die Kenntnis der physikalischen Eigenschaften der Pigmentpräparationen reicht nicht aus, um eine Aussage über deren Eignung für den Ink-Jet-Druck zu treffen. Insbesondere für den thermischen Ink-Jet-Druck (Bubble-Jet) spielt das Verhalten der Pigmentdispersionen während des Druckvorgangs in den Düsen eine wichtige Rolle. Durch die großen, wenn auch nur kurzzeitigen thermischen Belastungen darf es zu keiner Zersetzung der Pigmentdispersion kommen, z.B. einer Desorption der Dispergiermittelmoleküle von der Pigmentoberfläche, die zu einer Agglomeration der Pigmentpartikel führen würde. Derartige Zersetzungsprozesse könnten einerseits zu Ablagerungen auf den Heizelementen führen (cogation), andererseits könnten die Zersetzungsprodukte mit der Zeit die Düsen verstopfen (nozzle clogging).

Über die Eignung der Pigmentpräparationen zur Herstellung von Tinten für den Ink-Jet-Druck kann somit nur entschieden werden, indem Druckversuche unternommen werden. Um die drucktechnischen Eigenschaften der Pigmentpräparationen zu beurteilen, wurden aus den Präparationen Testtinten hergestellt und deren Verdruckbarkeit mit einem thermischen Ink-Jet-Drucker untersucht (vgl. Tabelle 2).

Für die Herstellung der Testtinten wurden die Pigmentpräparationen zunächst über einen 1 µm-Filter feinfiltriert, um Mahlkörperabrieb und eventuelle Grobanteile abzutrennen. Danach wurden die filtrierten Präparationen mit Wasser verdünnt und mit weiteren niedermolekularen Alkoholen und Polyolen versetzt. Die Testtinten für Gelb, Magenta und Cyan hatten dann die folgende Zusammensetzung:

| | |
|---|---|
| 25 Teile | Pigmentpräparation (vgl. Beispiele 1 bis 14) |
| 10 Teile | Ethylenglykol |
| 10 Teile | Diethylenglykol |
| 50 Teile | Entmineralisiertes Wasser |

Die Testtinten für Schwarz hatten dann die folgende Zusammensetzung:

| | |
|---|---|
| 33 Teile | Pigmentpräparation (vgl. Beispiele 15 und 16) |
| 10 Teile | Ethylenglykol |
| 10 Teile | Diethylenglykol |
| 47 Teile | Entmineralisiertes Wasser |

Dies entspricht einem Pigmentanteil von 5 Gew.-% in der jeweiligen Tinte.

Die Zusammensetzung der Testtinten wurde dabei so gewählt, dass die Viskosität in einem Bereich von 1,5 bis 5 mPas lag. Die Oberflächenspannung, neben der Viskosität die zweite wichtige physikalische Kenngröße der Drucktinten, bestimmt die Wechselwirkung der Tinte mit dem Druckkopf, wie z.B. die Benetzung der Düsenkanäle, aber auch die Bildung der Tintentropfen sowie deren Form und Größe. Um die Oberflächenspannung der Tinten auf einen für ein optimales Druckverhalten benötigten Wert einzustellen, ist es eventuell notwendig, der Tinte zusätzlich noch geringe Mengen an Tensid beizumischen.

Die Charakterisierung der Testtinten wurde mit den folgenden Methoden und Geräten durchgeführt:

### Oberflächenspannung

Die Oberflächenspannung der Testtinten wurde mit einem Digitaltensiometer K 10 T der Firma Krüss GmbH (Hamburg) bestimmt. Die in Tabelle 2 angegebenen Werte sind dabei Mittelwerte aus jeweils 10 aufeinanderfolgenden Messungen.

### Druckverhalten

Die Beurteilung des Druckverhaltens erfolgte anhand der folgenden zwei Bewertungskriterien:

### (1) Das Verhalten der Tinte bei der Strahlbildung am Druckkopf

Mit Hilfe einer speziellen Messanordnung (HP Print RIG mit Optica System) der Firma Vision Jet wurde das Verhalten der Testtinten beim Tintenstrahldruck mit einem thermischen Ink-Jet-Drucker der Firma Hewlett Packard (HP 420) untersucht. Mittels einer Videokamera kann das Verhalten der Tintenstrahlen während des Druckprozesses an einzelnen Düsen des Ink-Jet-Druckkopfs untersucht werden. Die Videobilder geben Aufschluss darüber, wie sich die pigmentierte Tinte bei der Ausbildung der Tintenstrahlen verhält, ob die Tinte in Form gerader, linearer Strahlen aus den Düsen des Druckkopfs geschleudert wird, ob einzelne Tropfen gebildet werden oder ob die Tropfen Satelliten aufweisen. Die Untersuchungen liefern zusätzliche Informationen zur Form der Tintentropfen und zeigen Unregelmäßigkeiten in der Tropfenbildung auf, die zum Beispiel durch Verstopfungen einzelner Düsen verursacht werden.

### (2) Untersuchung des Druckverhaltens auf Papier

Zudem wurden mit dem Drucker HP 420 Testbilder auf handelsübliche Normalpapiere (Kopierpapiere) und Spezialpapiere (Premium Qualität) der Firma Hewlett Packard gedruckt. Die Beurteilung der Ausdrucke bezüglich der Qualität und Güte des Druckbildes erfolgte durch rein visuelle Betrachtung. Dabei wurde untersucht, ob es zu einem starken Anfeuchten des Papiers kam, ob das Pigment in das Papier eindrang oder ob es an der Oberfläche des Papiers haften blieb. Des weiteren wurde darauf geachtet, inwieweit feine Linien originalgetreu wiedergegeben wurden, ob die Tinte auf dem Papier verlief, was eine geringe Auflösung zur Folge hatte, oder ob hochaufgelöste Drucke hergestellt werden konnten. Nach längeren Druckpausen wurde das Andruckverhalten untersucht, d.h. ob sofort ein guter und fehlerfreier Ausdruck gewährleistet war oder ob durch Antrocknung der Tinte einzelne Düsenkanäle verstopft waren, was zu einem schlechten Druckbild führte.

Die Kriterien (1) und (2) wurden herangezogen, um das Druckverhalten bzw. die Druckqualität der Tinten anhand des folgenden Bewertungsmaßstabs mit den Noten von 1 bis 6 zu beurteilen (vgl. Tabelle 2):
Note 1 --- Sehr gutes Druckbild, schöne gleichmäßige Tropfenbildung
Note 6 --- Tinte lässt sich nicht verdrucken, Verstopfen des Druckkopfes

**Tabelle 2**

| Beispiel | Oberflächenspannung [mN/m] | Druckqualität |
|---|---|---|
| 1 | 38 | 2 |
| 2 | 41 | 1 |
| 3 | 38 | 2 |
| 4 | 40 | 2 |
| 5 | 43 | 2 |
| 6 | 42 | 2 |
| 7 | 42 | 1 |
| 8 | 43 | 1 |
| 9 | 42 | 1 |
| 10 | 41 | 1 |
| 11 | 46 | 2 |
| 12 | 44 | 2 |
| 13 | 42 | 2 |
| 14 | 42 | 2 |
| 15 | 43 | 1 |
| 16 | 43 | 1 |

Aus den in den Beispielen vorgestellten Pigmentpräparationen (Tabelle 2) wurden Testtinten hergestellt, die mit dem Drucker HP 420 ein gutes bis sehr gutes Druckverhalten zeigten. Die Oberflächenspannung der Testtinten lag in einem Bereich von 38 bis 46 mN/m.

Die Pigmentpräparationen erfüllen somit die Anforderungen des Ink-Jet-Drucks an die physikalischen und drucktechnischen Eigenschaften in ausgezeichneter Art und Weise und sind somit ideal für Anwendungen im Ink-Jet-Druck geeignet.

## Patentansprüche

1. Wässrige Farbmittelpräparation, bestehend im wesentlichen aus
(A) 0,1 bis 50 Gew.-% mindestens eines organischen und/oder anorganischen Farbmittels,
(B) 0,1 bis 30 Gew.-% mindestens eines Succinamates,
(C) 0,1 bis 30 Gew.-% mindestens eines Polyethylenglykolalkylethers der Formel (III) entspricht 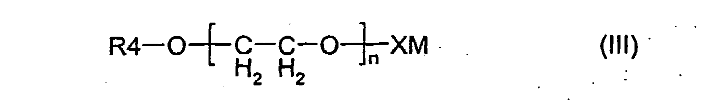 worin
R⁴ ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten 1, 2, 3 oder 4 Reste aus der Gruppe Halogen, Aryl, Aryl(C₁-C₂₀)alkyl, C₅-C₆-Cycloalkyl, Hetaryl, Hetaryl(C₁-C₂₀)alkyl oder C₁-C₂₀-Alkoxy sind,
n eine Zahl von 1 bis 100,
X CH₂COO⁻, SO₃⁻, SO₂⁻ oder PO₃M⁻ und
M H, ein einwertiges Metallkation, NH₄⁺, ein sekundäres, tertiäres oder quartäres Ammoniumion bedeuten
(D) 0 bis 30 Gew.-% mindestens eines alkoxylierten Styrol-Phenol-Kondensats,
(E) 0 bis 30 Gew.-% mindestens eines organischen Lösungsmittels,
(F) 0 bis 30 Gew.-% mindestens einer hydrotropen Substanz,
(G) 0 bis 10 Gew.-%, weiterer, für Ink-Jet-Präparationen üblicher Zusatzstoffe und
(H) 10 bis 90 Gew.-% entionisierten Wassers,
jeweils bezogen auf das Gesamtgewicht (100 Gew.-%) der Farbmittelpräparation.

2. Farbmittelpräparation nach Anspruch 1, **dadurch gekennzeichnet, dass** das Succinamat (B) einer Verbindung der Formel (Ia) oder (Ib) entspricht 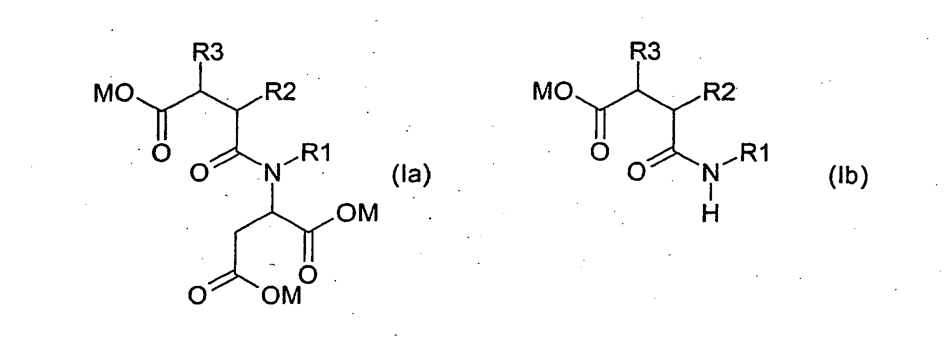 worin
R¹ H, ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten 1, 2, 3 oder 4 Reste aus der Gruppe Halogen, Aryl, Aryl(C₁-C₂₀)alkyl, Hetaryl, Hetaryl(C₁-C₂₀)alkyl oder C₁-C₂₀-Alkoxy sind,
R² und R³ unabhängig voneinander H, ein substituierter oder unsubstituierter, verzweigter oder unverzweigter C₁-C₂₀-Alkyl- oder C₃-C₂₀-Cycloalkylrest oder ein substituierter oder unsubstituierter, verzweigter oder unverzweigter C₁-C₂₀-Alkenyl- oder C₃-C₂₀-Cycloalkenylrest, wobei die Substituenten 1, 2, 3 oder 4 Reste aus der Gruppe Halogen, Hydroxy, C₁-C₄-Alkoxy, Nitro, Cyano, Carboxy, Amino, Sulfo, Aryl, Aryl(C₁-C₄)alkyl, Hetaryl, Hetaryl(C₁-C₄)alkyl, C₁-C₄-Alkoxy, COOM, SO₃M, SO₂M und PO₃M₂ sind, und
M H, ein einwertiges Metallkation, NH₄⁺, ein sekundäres, tertiäres oder quartäres Ammoniumion bedeuten.

3. Farbmittelpräparation nach Anspruch 1 oder 2,
**dadurch gekennzeichnet, dass** das alkoxylierte Styrol-Phenol-Kondensat (D) einer Verbindung der Formel (IV) oder (V) oder deren Gemischen entspricht 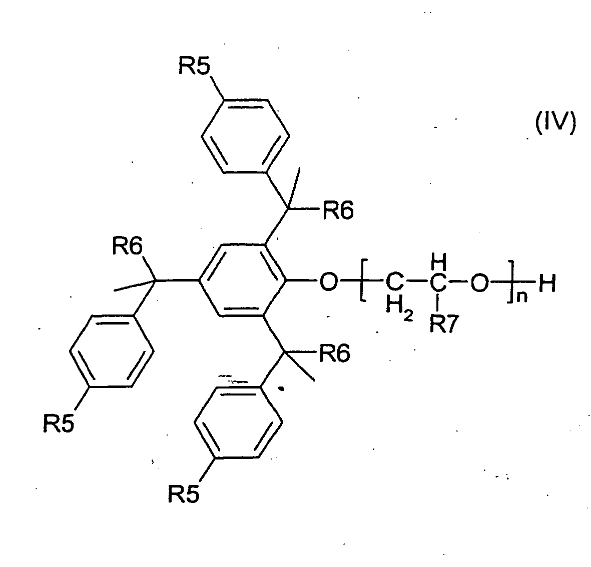 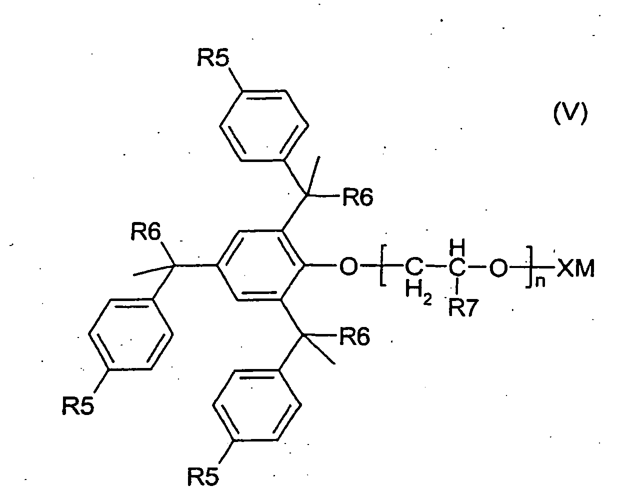 worin
R⁵ H, ein verzweigter oder unverzweigter C₁-C₂₀-Alkyl- oder C₃-C₂₀-Cycloalkylrest oder ein verzweigter oder unverzweigter C₁-C₂₀-Alkenyl- oder C₃-C₂₀-Cycloalkenylrest;
R⁶ und R⁷ unabhängig voneinander H, ein verzweigter oder unverzweigter C₁-C₂₀-Alkyl- oder C₃-C₂₀-Cycloalkylrest oder ein verzweigter oder unverzweigter C₁-C₂₀-Alkenyl- oder C₃-C₂₀-Cycloalkenylrest,
n eine Zahl von 1 bis 100,
X CO-R₈-COO⁻, SO₃⁻, SO₂⁻ oder PO₃M⁻,
R⁸ ein substituierter oder unsubstituierter, verzweigter oder unverzweigter C₁-C₂₀-Alkylenrest, ein substituierter, unsubstituierter oder verzweigter oder unverzweigter C₁-C₂₀-Alkenylenrest, oder ein substituierter oder unsubstituierter Arylenrest, wobei die Substituenten bevorzugt 1, 2, 3 oder 4 Reste aus der Gruppe Halogen, Hydroxy, C₁-C₄-Alkoxy, Nitro, Cyano, Carboxy, Amino oder Sulfo sind, und
M H, ein einwertiges Metallkation, NH₄⁺, ein sekundäres, tertiäres oder quartäres Ammoniumion bedeuten.

4. Farbmittelpräparation nach einem oder mehreren der Ansprüche 1 bis 3.
**dadurch gekennzeichnet, dass** das organische Farbmittel ein oder mehrere organische Pigmente aus der Gruppe der Monoazo-, Disazo-, verlackten Azo-, β-Naphthol-, Naphthol AS-, Benzimidazolon-, Disazokondensations-, Azo-Metallkomplex-, Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, lsoindolin-, Isoindolinon- oder Diketopyrrolopyrrol-Pigmente oder Ruß; oder ein Säurefarbstoff, Direktfarbstoff, Schwefelfarbstoff oder dessen Leukoform, Metallkomplexfarbstoff, Reaktivfarbstoff oder mit einem Nukleophil abreagierter Reaktivfarbstoff; oder eine Kombination der genannten Pigmente mit den genannten Farbstoffen ist.

5. Verfahren zur Herstellung einer Farbmittelpräparation gemäß einem oder mehreren der Ansprüche 1 bis 4, **dadurch gekennzeichnet, dass** das Farbmittel (A) zusammen mit den Komponenten (B), (C), und gegebenenfalls (D), (E), (F) und/oder (G) in entionisiertem Wasser (Komponente H) angeteigt und homogenisiert wird, und mit Hilfe eines Mahl- oder Dispergieraggregats feindispergiert oder feinverteilt wird.

6. Verwendung einer Farbmittelpräparation nach einem oder mehreren der Ansprüche 1 bis 4 als Farbmittel für Drucktinten, insbesondere für Ink-Jet-Tinten, elektrophotographische Toner, insbesondere Polymerisationstoner, Pulverlacke, Farbfilter, elektronische Tinten und "electronic paper", Anstrich- und Dispersionsfarben, Dispersionslacke, Druckfarben, Tapetenfarben, wasserverdünnbare Lacke, Holzschutzsysteme, Viskose-Spinnfärbung, Lacke, Wurstdärme, Saatgut, Glasflaschen, die Massefärbung von Dachziegeln, Putze, Holzbeizen, Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien.

7. Ein Satz von Drucktinten, der Drucktinten der Farben Schwarz, Cyan, Magenta, Gelb, gegebenenfalls Orange und gegebenenfalls Grün enthält und
**dadurch gekennzeichnet ist, dass** mindestens eine der Drucktinten eine Farbmittelpräparation gemäß einem oder mehrerer der Ansprüche 1 bis 4 ist oder enthält.

8. Satz von Drucktinten nach Anspruch 7, **dadurch gekennzeichnet, dass**
• das Farbmittel der schwarzen Farbmittelpräparation ein Ruß, und/oder
• das Farbmittel der cyan-farbenen Farbmittelpräparation ein Pigment aus der Gruppe der Phthalocyanin-, Indanthron- oder Triarylcarboniumpigmente, und/oder
• das Farbmittel der magenta-farbenen Farbmittelpräparation ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente, und/oder
• das Farbmittel der gelben Farbmittelpräparation ein Pigment aus der Gruppe der Monoazo-, Disazo-, Benzimidazolin-, Isoindolinon-, Isoindolin- oder Perinonpigmente, und/oder
• das Farbmittel der orange-farbenen Farbmittelpräparation ein Pigment aus der Gruppe der Disazo-, β-Naphthol-, Naphthol AS-, Benzimidazolon- oder Perinonpigmente, und/oder
• das Farbmittel der grünen Farbmittelpräparation ein Pigment aus der Gruppe der Phthalocyaninpigmente, und/oder
• die in den Präparationen gegebenenfalls enthaltenen organischen Farbstoffe aus der Gruppe der Säurefarbstoffe, Direktfarbstoffe; Schwefelfarbstoffe und deren Leukoform, Metallkomplexfarbstoffe oder Reaktivfarbstoffe, sind.

## Claims

1. An aqueous colorant preparation consisting essentially of
(A) 0.1% to 50% by weight of at least one organic and/or inorganic colorant,
(B) 0.1 % to 30% by weight of at least one succinamate,
(C) 0.1% to 30% by weight of at least one polyethylene glycol alkyl ether corresponding to the formula (III) 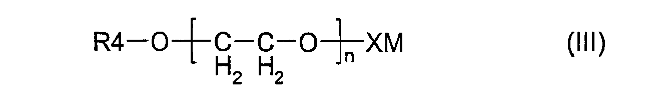 where
R⁴ is a substituted or unsubstituted, branched or unbranched C₁-C₂₀-alkyl or C₃-C₂₀-cycloalkyl radical or a substituted or unsubstituted, branched or unbranched C₁-C₂₀-alkenyl or C₃-C₂₀-cycloalkenyl radical, the substituents being 1, 2, 3 or 4 radicals from the group consisting of halogen, aryl, aryl(C₁-C₂₀)alkyl, C₅-C₆-cycloalkyl, hetaryl, hetaryl(C₁-C₂₀)alkyl or C₁-C₂₀-alkoxy,
n is from 1 to 100,
X is CH₂COO⁻, SO₃⁻, SO₂⁻ or PO₃M⁻, and
M is H, a univalent metal cation, NH₄⁺, a secondary, tertiary or quaternary ammonium ion,
(D) 0% to 30% by weight of at least one alkoxylated styrene-phenol condensate,
(E) 0% to 30% by weight of at least one organic solvent,
(F) 0% to 30% by weight of at least one hydrotropic substance,
(G) 0% to 10% by weight of further customary additives for ink jet preparations, and
(H) 10% to 90% by weight of deionized water, all based on the total weight (100% by weight) of the colorant preparation.

2. The colorant preparation according to claim 1 wherein the succinamate (B) corresponds to a compound of the formula (Ia) or (Ib) 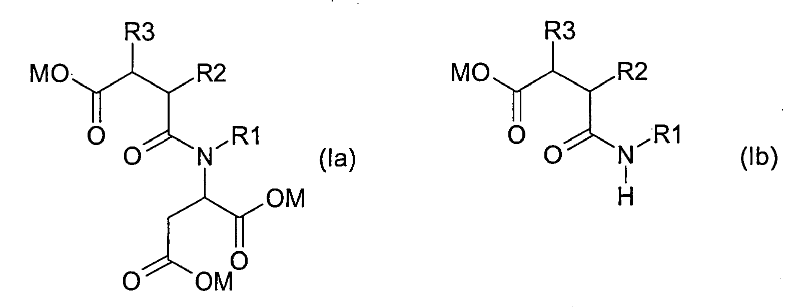 where
R¹ is H, a substituted or unsubstituted, branched or unbranched C₁-C₂₀-alkyl or C₃-C₂₀-cydoalkyl radical or a substituted or unsubstituted, branched or unbranched C₁-C₂₀-alkenyl or C₃-C₂₀-cycloalkenyl radical, the substituents being 1, 2, 3 or 4 radicals from the group consisting of halogen, aryl, aryl(C₁-C₂₀)alkyl, hetaryl, hetaryl(C₁-C₂₀)alkyl or C₁-C₂₀-alkoxy,
R² and R³ are independently H, a substituted or unsubstituted, branched or unbranched C₁-C₂₀-alkyl or C₃-C₂₀-cycloalkyl radical or a substituted or unsubstituted, branched or unbranched C₁-C₂₀-alkenyl or C₃-C₂₀-cycloalkenyl radical, the substituents being 1, 2, 3 or 4 radicals from the group consisting of halogen, hydroxyl, C₁-C₄-alkoxy, nitro, cyano, carboxyl, amino, sulfo, aryl, aryl(C₁-C₄)alkyl, hetaryl, hetaryl(C₁-C₄)alkyl, C₁-C₄-alkoxy, COOM, SO₃M, SO₂M and PO₃M₂, and
M is H, a univalent metal cation, NH₄⁺, a secondary, tertiary or quaternary ammonium ion.

3. The colorant preparation according to claim 1 or 2 wherein the alkoxylated styrene-phenol condensate (D) corresponds to a compound of the formula (IV) or (V) or mixtures thereof 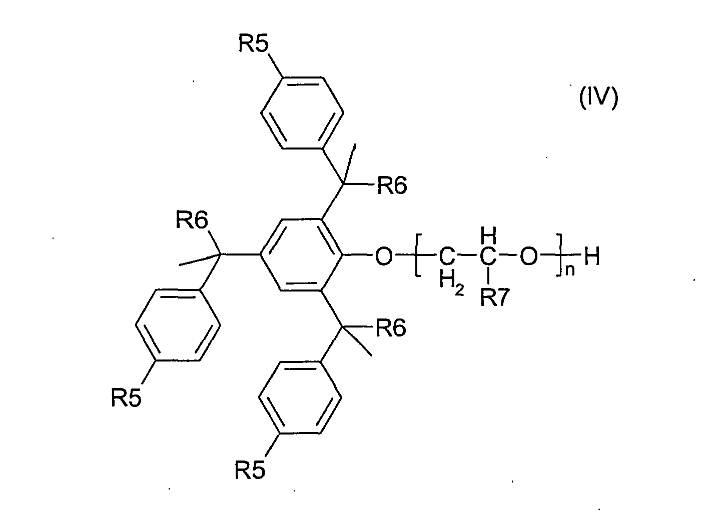 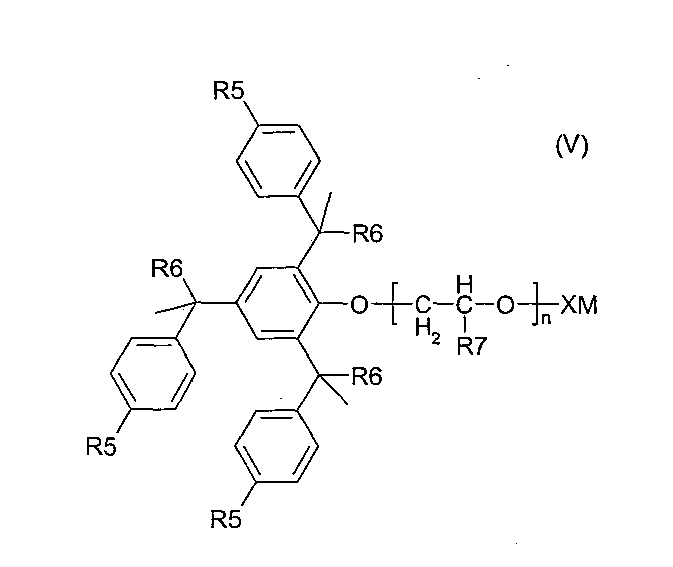 where
R⁵ is H, a branched or unbranched C₁-C₂₀-alkyl or C₃-C₂₀-cycloalkyl radical or a branched or unbranched C₁-C₂₀-alkenyl or C₃-C₂₀-cycloalkenyl radical,
R⁶ and R⁷ are independently H, a branched or unbranched C₁-C₂₀-alkyl or C₃-C₂₀-cycloalkyl radical or a branched or unbranched C₁-C₂₀-alkenyl or C₃-C₂₀-cycloalkenyl radical,
n is from 1 to 100,
X is CO-R₈-COO⁻, SO₃⁻, SO₂⁻ or PO₃M⁻,
R⁸ is a substituted or unsubstituted, branched or unbranched C₁-C₂₀-alkylene radical, a substituted, unsubstituted, branched or unbranched C₁-C₂₀-alkenylene radical or a substituted or unsubstituted arylene radical, the substituents preferably being 1, 2, 3 or 4 radicals from the group consisting of halogen, hydroxyl, C₁-C₄-alkoxy, nitro, cyano, carboxyl, amino and sulfo, and
M is H, a univalent metal cation, NH₄⁺, a secondary, tertiary or quaternary ammonium ion.

4. The colorant preparation according to one or more of claims 1 to 3 wherein the organic colorant is one or more organic pigments from the group of the monoazo, disazo, laked azo, β-naphthol, Naphthol AS, benzimidazolone, condensed disazo, azo, metal complex, phthalocyanine, quinacridone, perylene, perinone, thioindigo, anthanthrone, anthraquinone, flavanthrone, indanthrone, isoviolanthrone, pyranthrone, dioxazine, quinophthalone, isoindoline, isoindolinone or diketopyrrolopyrrole pigments or carbon black; or an acid dye, direct dye, sulfur dye or its leuco form, metal complex dye, reactive dye or a reaction product of a reactive dye with a nucleophile; or a combination of the pigments mentioned with the dyes mentioned.

5. A process for producing a colorant preparation according to one or more of claims 1 to 4, which comprises the colorant (A) being pasted up together with the components (B), (C), and if appropriate (D), (E), (F) and/or (G) in deionized water (component H) and homogenized and being finely dispersed or finely divided by means of a grinding or dispersing assembly.

6. The use of a colorant preparation according to one or more of claims 1 to 4 as a colorant for printing inks, especially for ink jet inks, electrophotographic toners, especially polymerization toners, powder coatings, color filters, electronic inks and electronic paper, paints, including emulsion paints, dispersion varnishes, printing inks, wallpaper colors, water-thinnable coating materials, wood preservation systems, viscose solution dyeing, varnishes, sausage casings, seed, glass bottles, the mass coloration of roofing shingles, renders, woodstains, colored pencil leads, felttip pens, artists' inks, pastes for ballpoint pens, chalks, laundering and cleaning compositions, shoecare products, coloration of latex products, abrasives and also for coloration of plastics and macromolecular materials.

7. A set of printing inks which comprises printing inks in the colors black, cyan, magenta, yellow, if appropriate orange and if appropriate green and is **characterized by** at least one of the printing inks being or comprising a colorant preparation according to one or more of claims 1 to 4.

8. The set of printing inks according to claim 7 wherein
• the colorant of the black colorant preparation is a carbon black, and/or
• the colorant of the cyan colorant preparation is a pigment from the group of the phthalocyanine, indanthrone or triarylcarbonium pigments, and/or
• the colorant of the magneta colorant preparation is a pigment from the group of the monoazo, disazo, β-naphthol, Naphthol AS, laked azo, metal complex, benzimidazolone, anthanthrone, anthraquinone, quinacridone, dioxazine, perylene, thioindigo, triarylcarbonium or diketopyrrolopyrrole pigments, and/or
• the colorant of the yellow colorant preparation is a pigment from the group of the monoazo, disazo, benzimidazoline, isoindolinone, isoindoline or perinone pigments, and/or
• the colorant of the orange colorant preparation is a pigment from the group of the disazo, β-naphthol, Naphthol AS, benzimidazolone or perinone pigments, and/or
• the colorant of the green colorant preparation is a pigment from the group of the phthalocyanine pigments, and/or
• the organic dyes which are present in the preparations, if appropriate, are from the group of the acid dyes, direct dyes, sulfur dyes and their leuco form, metal complex dyes or reactive dyes.

## Revendications

1. Préparation colorante aqueuse, constituée essentiellement
(A) de 0,1 à 50 % en poids d'au moins un colorant organique et/ou inorganique,
(B) de 0,1 à 30 % en poids d'au moins un succinamate,
(C) de 0,1 à 30 % en poids d'au moins un polyéthylèneglycolalkyléther de formule (III) 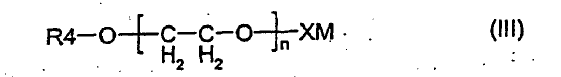 dans laquelle
R⁴ est un radical alkyle en C₁-C₂₀ ou cycloalkyle en C₃-C₂₀ substitué ou non substitué, à chaîne droite ou ramifiée, ou un radical alcényle en C₁-C₂₀ ou cycloalcényle en C₃-C₂₀ substitué ou non substitué, à chaîne droite ou ramifiée, les substituants représentant 1, 2, 3 ou 4 radicaux de l'ensemble consistant en les groupes halogéno, aryle, aryl (alkyle en C₁-C₂₀), cycloalkyle en C₅-C₆, hétéroaryle, hétéroaryl (alkyle en C₁-C₂₀) ou alcoxy en C₁-C₂₀,
n est un nombre de 1 à 100,
X est CH₂COO⁻, SO₃⁻, SO₂⁻ ou PO₃M⁻, et
M est H, un cation d'un métal monovalent, NH₄⁺, un ion ammonium secondaire, tertiaire ou quaternaire,
(D) de 0 à 30 % en poids d'au moins un produit de condensation styrène-phénol alcoxylé,
(E) de 0 à 30 % en poids d'au moins un solvant organique,
(F) de 0 à 30 % en poids d'au moins une substance hydrotrope,
(G) de 0 à 10 % en poids d'autres additifs usuels pour des préparations pour jet d'encre, et
(H) de 10 à 90 % en poids d'eau désionisée,
dans tous les cas par rapport au poids total (100 % en poids) de la préparation colorante.

2. Préparation colorante selon la revendication 1, **caractérisée en ce que** le succinamate est un composé de formule (Ia) ou (Ib) 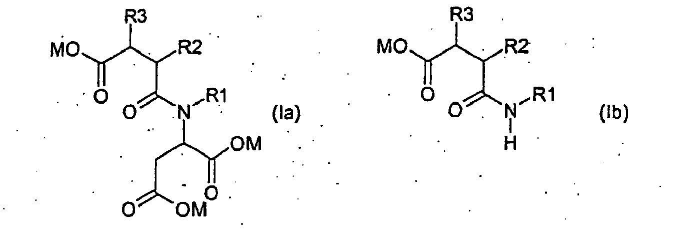 dans lesquelles
R¹ est H ou un radical alkyle en C₁-C₂₀ ou un radical cycloalkyle en C₃-C₂₀ substitué ou non substitué, à chaîne droite ou ramifiée, ou un radical alcényle en C₁-C₂₀ ou cycloalcényle en C₃-C₂₀ substitué ou non substitué, à chaîne droite ou ramifiée, les substituants représentant 1, 2, 3 ou 4 radicaux de l'ensemble consistant en les groupes halogéno, aryle, aryl (alkyle en C₁-C₂₀), hétéroaryle, hétéroaryl(alkyle en C₁-C₂₀) ou alcoxy en C₁-C₂₀,
R² et R³ représentent chacun indépendamment de l'autre H, un radical alkyle en C₁-C₂₀ ou cycloalkyle en C₃-C₂₀ substitué ou non substitué, à chaîne droite ou ramifiée, ou un radical alcényle en C₁-C₂₀ ou cycloalcényle en C₃-C₂₀ substitué ou non substitué, à chaîne.droite ou ramifiée, les substituants représentant 1, 2, 3 ou 4 radicaux choisis dans l'ensemble consistant en les groupes halogéno, hydroxy, alcoxy en C₁-C₄, nitro, cyano, carboxy, amino, sulfo, aryle, aryl(alkyle en C₁-C₄), hétéroaryle, hétéroaryl (alkyle en C₁-C₄), alcoxy en C₁-C₄, COOM, SO₃M, SO₂M et PO₃M₂, et
M est H, un cation d'un métal monovalent, NH₄⁺, un ion ammonium secondaire, tertiaire ou quaternaire.

3. Préparation colorante selon la revendication 1 ou 2, **caractérisée en ce que** le produit de condensation styrène-phénol alcoxy (D) correspond à un composé de formule (IV) ou (V) ou leurs mélanges 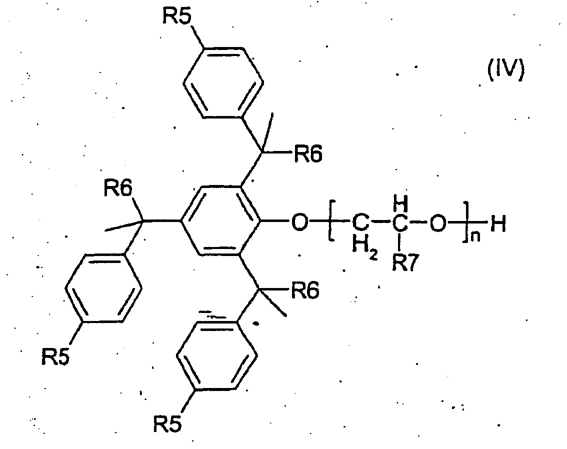 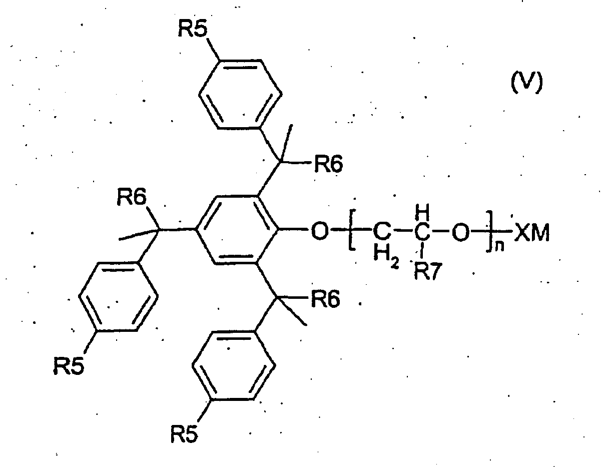 dans lesquelles
R⁵ est H ou un radical alkyle en C₁-C₂₀ ou cycloalkyle en C₃-C₂₀ à chaîne droite ou ramifiée, ou un radical alcényle en C₁-C₂₀ ou cycloalcényle en C₃-C₂₀ à chaîne droite ou ramifiée,
R⁶ et R⁷ représentent chacun indépendamment de l'autre H, un radical alkyle en C₁-C₂₀ ou cycloalkyle en C₃-C₂₀ à chaîne droite ou ramifiée, ou un radical alcényle en C₁-C₂₀ ou cycloalcényle en C₃-C₂₀ à chaîne droite ou ramifiée,
n est un nombre de 1 à 100,
X est CO-R₈-COO⁻, SO₃⁻, SO₂⁻ ou PO₃M⁻,
R⁸ est un radical alkylène en C₁-C₂₀ substitué ou non substitué, à chaîne droite ou ramifiée, un radical alcénylène en C₁-C₂₀ substitué ou non substitué, à chaîne droite ou ramifiée, ou un radical arylène substitué ou non substitué, les substituants représentant de préférence 1, 2, 3 ou 4 radicaux choisis dans le groupe constitué par les groupes halogéno, hydroxy, alcoxy en C₁-C₄, nitro, cyano, carboxy, amino ou sulfo, et
M est H, un cation d'un métal monovalent, NH₄⁺, un ion ammonium secondaire, tertiaire ou quaterriaire.

4. Préparation colorante selon l'une ou plusieurs des revendications 1 à 3, **caractérisée en ce que** le colorant organique représente un ou plusieurs pigments organiques du groupe des pigments morioazoïques, disazoïques, azoïques laqués, de β-naphtol, de naphtol AS, de benzimidazolone, de condensation disazoïque, azoïque à complexe métallifère, de phtalocyanine, de quinacridone, de pérylène, de périnone, de thioindigo, d'anthanthrone, d'anthraquinone, de flavanthrone, d'indanthrone, d'isoviolanthrone, de pyranthrone, de dioxazine, de quinophtalone, d'isoindoline, d'isoindolinone ou de dicétopyrrolopyrrole, ou de noir de carbone ; ou un colorant acide, un colorant direct, un colorant de soufre ou sa forme leucodérivée, un colorant à complexe métallifère, un colorant réactif ou un colorant réactif ayant réagi avec un nucléophile ; ou une combinaison des pigments mentionnés ci-dessus avec les colorants mentionnés ci-dessus.

5. Procédé de fabrication d'une préparation colorante selon l'une ou plusieurs des revendications 1 à 4, **caractérisé en ce que** le colorant (A) est, en même temps que les composants (B), (C) et éventuellement (D), (E), (F) et/ou (G), transformé en pâte et homogénéisé dans de l'eau désionisée (composant H), et est finement dispersé ou divisé à l'aide d'un équipement broyeur ou disperseur.

6. Utilisation d'une préparation colorante selon l'une ou plusieurs des revendications 1 à 4 en tant que colorant pour encres d'imprimerie, en particulier pour encres pour imprimante à jet d'encre, toners électrophotographiques, en particulier toners de polymérisation, peintures en poudre, filtres colorés, encres électroniques et "papier électronique", peintures et peintures émulsion, vernis en émulsion, encres d'imprimerie, encres pour papier peint, vernis diluables à l'eau, systèmes de protection du bois, coloration de la viscose dans la masse, vernis, boyaux pour saucisses, semences, bouteilles en verre, pour la coloration dans la masse des tuiles de toiture, les enduits, les peintures pour bois, les mines pour crayons de couleur, les feutres à pointe fine, les encres de Chine, les pâtes pour stylos à bille, les craies, les produits détergents et nettoyants, les produits pour l'entretien des chaussures, la coloration dans la masse des produits de latex, des abrasifs, et pour la coloration dans la masse des plastiques et des matériaux à grande masse moléculaire.

7. Kit d'encres d'imprimerie, qui contient des encres d'imprimerie ayant les couleurs noire, cyan, magenta, jaune, éventuellement orangé et éventuellement vert, et **caractérisé en ce qu'**au moins l'une des encres d'imprimerie est ou contient une préparation colorante selon l'une ou plusieurs des revendications 1 à 4.

8. Kit d'encres d'imprimerie selon la revendication 7, **caractérisé en ce que**
- le colorant de la préparation colorante noire est un noir ce carbone, et/ou
- le colorant de la préparation colorante de couleur cyan est un pigment du groupe des pigments de phtalocyanine, d'indanthrone ou de triarylcarbonium, et/ou
- le colorant de la préparation colorante de couleur magenta est un pigment du groupe des pigments monoazoïques, disazoïques, de β-naphtol, de naphtol AS, azoïques laqués, à complexe métallifère, de benzimidazolone, d'anthanthrone, d'anthraquinone, de guinacridone, de dioxazine, de pérylène, de thioindigo, de triarylcarbonium ou de dicétopyrrolopyrrole, et/ou
- le colorant de la préparation colorante jaune est un pigment du groupe des pigments monoazoïques, disazoïques, de benzimidazoline, d'isoindolinone, d'isoindoline ou de périnone, et/ou
- le colorant de la préparation pigmentaire de couleur orangée est un pigment du groupe des pigments disazoïques, de β-naphtol, de naphtol AS, de benzimidazolone ou de périnone, et/ou
- le colorant de la préparation colorante verte est un pigment du groupe des pigments de phtalocyanine, et/ou
- les colorants organiques contenus éventuellement dans les préparations appartiennent au groupe des colorants acides, des colorants directs, des colorants de soufre et leurs formes leucodérivées, des colorants à complexe métallifère ou des colorants réactifs.
